# FASCICULE DE BREVET EUROPEEN

(11) **EP 2 541 710 B1**
(45) Date de publication et mention de la délivrance du brevet: **14.05.2014**
(21) Numéro de dépôt: 12174024.5
(22) Date de dépôt: 28.06.2012
(51) Int. Cl.: H02G 3/30

(54) **Console de supportage, procédé de fabrication d'une telle console et chemin de câbles comprenant une telle console**
Trägerkonsole, Herstellungsverfahren einer solchen Konsole und Kabelpritsche, die eine solche Konsole umfasst
Support console, method for manufacturing such a console and cable tray including such a console

(30) Priorité: 29.06.2011 FR 1155806
(43) Date de publication de la demande: 02.01.2013
(73) Titulaire: Gewiss France SA, 21430 Liernais (FR)
(72) Inventeur: Leguy, Claude, 21430 Marcheseuil (FR)
(74) Mandataire: Myon, Gérard Jean-Pierre

(56) Documents cités:
- EP-A1- 1 475 871
- EP-A1- 2 290 772
- EP-A2- 1 408 593
- WO-A1-96/17143

## Description

La présente invention a trait à une console de supportage pour une goulotte de chemin de câbles ou analogue. La présente invention a également trait à un chemin de câbles comprenant, entre autres, une telle console, ainsi qu'à un procédé de fabrication d'une telle console.

Dans le domaine du supportage de câbles ou autres éléments allongés, il est connu de maintenir en position une goulotte au moyen d'une console fixée sur un mur, une poutre ou un montant vertical. Une telle console peut être réalisée par pliage d'un flanc de tôle, tout en étant pourvue de découpes ou d'orifices constituant des moyens de fixation de la goulotte, par exemple en utilisant des boulons ou des rivets. Une telle console comprend généralement un barreau destiné à recevoir en appui le fond de la goulotte qu'elle supporte. Ce barreau est lui-même maintenu en position par rapport à la structure porteuse au moyen d'un talon.

Ce talon peut être rapporté sur le barreau par soudage, ce qui relève d'un procédé d'assemblage onéreux et impose d'appliquer un revêtement anticorrosion après l'étape de soudage.

Selon l'approche représentée à la figure 5 de WO-A-96/17143, le talon peut être réalisé par cintrage d'un profilé qui définit également le barreau sur lequel repose normalement une goulotte. La tenue à la charge d'un tel dispositif est relativement limitée. Elle dépend de la hauteur du profil en oméga utilisé, laquelle hauteur est elle-même limitée par le procédé de cambrage.

WO-A-98/27630 prévoit un système composé de trois pièces, à savoir une « console » proprement dite qui peut être assimilée au barreau mentionné ci-dessus, une coulisse ou pendard qui sert de fixation et une goupille prévue pour solidariser les deux pièces précédentes. Cette approche induit l'utilisation de trois pièces, ce qui est désavantageux en termes de fabrication, de distribution et d'installation.

Il est en outre connu de EP-A-2 290 772 de réaliser une console au moyen de deux pièces à section en U qui sont assemblées par clinchage et, éventuellement, par coopération de formes. L'assemblage entre les deux parties constitutives d'une telle console a lieu postérieurement aux étapes de découpage et de pliage, sur un autre poste de travail, ce qui induit des manipulations relativement complexes et augmente d'autant plus le prix de revient de la console.

C'est à ces inconvénients qu'entend plus particulièrement remédier l'invention en proposant une console de supportage particulièrement résistante et économique à fabriquer.

A cet effet, l'invention concerne une console de supportage pour une goulotte de chemin de câbles ou analogue, cette console étant formée par découpage et pliage de tôle et comprenant un barreau destiné à recevoir en appui la goulotte, qui s'étend selon un premier axe longitudinal et qui est à section transversale en forme de U à fond plat, avec un plateau de fond et deux ailes latérales planes, ainsi qu'un talon de montage du barreau sur une structure porteuse, qui s'étend au moins en partie selon un deuxième axe longitudinal perpendiculaire au premier axe longitudinal et qui est à section transversale en forme de U à fond plat, avec une paroi de fond et deux ailes planes. Dans cette console, les ailes du barreau et les ailes du talon sont en recouvrement partiel et solidarisées entre elles dans leurs zones de recouvrement, alors que les ailes du barreau sont rabattues, par rapport au plateau de fond et au niveau de première et deuxième arêtes rectilignes de jonction avec ce plateau, selon une première direction et que les ailes du talon sont rabattues, par rapport à la paroi de fond et au niveau de troisième et quatrième arêtes rectilignes de jonction avec la paroi de fond, selon une deuxième direction opposée. Conformément à l'invention :
- le barreau et le talon sont monobloc, découpés dans un même flanc de tôle et reliés par une bande de liaison,
- la deuxième direction est opposée à la première direction, et
- la bande de liaison est rabattue, par rapport au plateau de fond et à la plaque de fond et au niveau de cinquième et sixième arêtes parallèles et rectilignes de jonction, respectivement avec le plateau de fond et avec la paroi de fond, selon deux directions opposées.

La structure monobloc de la console, obtenue grâce aux différentes opérations de pliage selon les arêtes rectilignes, permet une fabrication au sein d'une même machine de découpage/pliage. La solidarisation des ailes du barreau et du talon permet une transmission d'effort efficace entre ces parties de la console, sans avoir recours à une structure bipartite telle que connue de EP-A-2 297 072.

Selon des aspects avantageux mais non obligatoires de l'invention, une telle console peut incorporer une ou plusieurs des caractéristiques suivantes prises dans toute combinaison techniquement admissible :
- Les première et deuxième arêtes de jonction sont parallèles entre elles, alors que les troisième et quatrième arêtes de jonction sont parallèles entre elles et que les cinquième et sixième arêtes de jonction sont perpendiculaires aux première, deuxième, troisième et quatrième arêtes.
- Le barreau est pourvu d'au moins une encoche de réception d'un fil de chaîne de la goulotte alors que cette encoche s'étend à la fois dans le plateau de fond et dans au moins une aile du barreau. Dans ce cas, on peut prévoir qu'au moins un premier bord de l'encoche situé au niveau du plateau de fond est pourvu d'au moins une languette de verrouillage d'un fil de chaîne, cette languette étant déformable entre une première configuration, dans laquelle la languette est rabattue selon une direction perpendiculaire à l'axe longitudinal du barreau et s'étend par rapport à un deuxième bord de cette encoche à une première distance mesurée parallèlement à l'axe longitudinal du barreau strictement supérieure au diamètre du fil de chaîne, et une deuxième configuration, dans laquelle la languette s'étend selon un direction parallèle ou globalement parallèle à l'axe longitudinal du barreau en direction du deuxième bord de l'encoche à une deuxième distance de ce deuxième bord mesurée parallèlement à l'axe longitudinal du barreau strictement inférieure au diamètre du fil de chaîne.
- Dans leur zone de recouvrement partiel, les ailes du barreau et les ailes du talon sont solidarisées par sertissage, boulonnage ou soudage.
- Le talon est rectiligne et rigide et sa paroi de fond est percée d'au moins une ouverture de passage d'un moyen de fixation de la console sur une structure porteuse.
- En variante, le talon est formé d'un premier segment et d'un deuxième segment, le premier segment étant relié à la bande de liaison par la sixième arête de jonction, alors que les premier et deuxième segments sont reliés entre eux par la septième arête de jonction, la paroi de fond du deuxième segment étant percée d'au moins une ouverture de passage d'un moyen de fixation sur une structure porteuse, alors que les ailes des premier et deuxième segments sont en recouvrement partiel et solidarisées entre elles au niveau de leur zone de recouvrement.
- Le talon est pourvu, au niveau des troisième et quatrième arêtes rectilignes de jonction, de languettes d'accrochage sur un montant.
- Le talon est pourvu, au niveau de la plaque de fond, d'une découpe définissant une languette rabattable autour d'un axe perpendiculaire au deuxième axe longitudinal.

L'invention concerne également un tronçon de chemin de câbles qui comprend au moins une goulotte définissant un chemin pour des câbles ou des matériels analogues, ainsi qu'une console telle que mentionnée ci-dessus. Un matériel analogue à un câble peut être un tuyau ou tout autre élément allongé devant être supporté, notamment en hauteur. Un chemin de câbles conforme à l'invention est plus facile à installer et plus économique que ceux de l'état de la technique.

L'invention concerne également un procédé de fabrication d'une console du type mentionnée ci-dessus et, plus spécifiquement, un procédé de fabrication d'une console de supportage pour une goulotte de chemin de câbles ou analogue, réalisée au moyen d'opérations de découpage et de pliage d'un flanc de tôle, cette console comprenant un barreau destiné à recevoir en appui la goulotte, qui s'étend selon un premier axe longitudinal et qui est à section transversale en forme de U à fond plat, avec un plateau de fond et deux ailes latérales planes, ainsi qu'un talon de montage du barreau sur une structure porteuse, qui s'étend au moins en partie selon un deuxième axe longitudinal perpendiculaire au premier axe longitudinal et qui est à section transversale en forme de U à fond plat, avec une paroi de fond et deux ailes planes. Ce procédé comprend des étapes consistant à :
a) former une ébauche de console définissant une première partie de barreau et une deuxième partie de talon
b) rabattre des portions de la première partie destinées à former les ailes du barreau, par rapport au plan de l'ébauche dans lequel se trouve le plateau de fond, autour d'une première et d'une deuxième lignes de pliage et selon une première direction
c) rabattre des portions de la deuxième partie destinées à former les ailes du talon, par rapport au plan de l'ébauche dans lequel se trouve la paroi de fond, autour d'une troisième et d'une quatrième lignes de pliage et selon une deuxième direction
e) solidariser entre elles, dans leur zone de recouvrement partiel, les ailes du barreau et les ailes du talon.

Conformément à l'invention,
- l'ébauche de console est monobloc et formée, lors de l'étape a), par découpage d'un même flanc de tôle et cette ébauche définit une bande de liaison entre la première partie de barreau et la deuxième partie de talon
- la deuxième direction est opposée à la première direction et
- le procédé comprend une étape d) antérieure à l'étape e) et consistant à rabattre la bande de liaison, par rapport au plan de l'ébauche, respectivement autour de cinquième et sixième lignes de pliage parallèles entre elles et selon deux directions opposées, en amenant les ailes du barreau et les ailes du talon en recouvrement partiel.

L'ordre des étapes b) et c) mentionnées ci-dessus est donné à titre indicatif. Ces étapes peuvent être réalisées l'une après l'autre, dans n'importe quel ordre, ou simultanément.

Avantageusement, lors de l'étape e), les ailes du barreau et du talon sont solidarisées entre elles par sertissage au sein de la machine dans laquelle sont réalisées les étapes b) et e).

L'invention sera mieux comprise et d'autres avantages de celle-ci apparaîtront plus clairement à la lumière de la description qui va suivre de quatre modes de réalisation d'une console conforme à son principe, donnée uniquement à titre d'exemple et faite en référence aux dessins annexés dans lesquels :
- la figure 1 est une vue en perspective d'une ébauche utilisée pour la fabrication d'une console conforme à l'invention,
- la figure 2 est une vue en perspective, en cours de fabrication, d'une console réalisée à partir de l'ébauche de la figure 1,
- la figure 3 est une vue en perspective, selon un autre angle, de la console de la figure 2 au cours d'une étape de fabrication postérieure à celle de la figure 2,
- la figure 4 est une vue en perspective de la console des figures 2 et 3 au terme de sa fabrication,
- la figure 5 est une coupe à plus grande échelle selon la ligne V-V à la figure 4,
- la figure 6 est une vue en perspective de la console des figures 2 à 5 en cours d'utilisation,
- la figure 7 est une vue en perspective d'une ébauche d'une console conforme à un deuxième mode de réalisation,

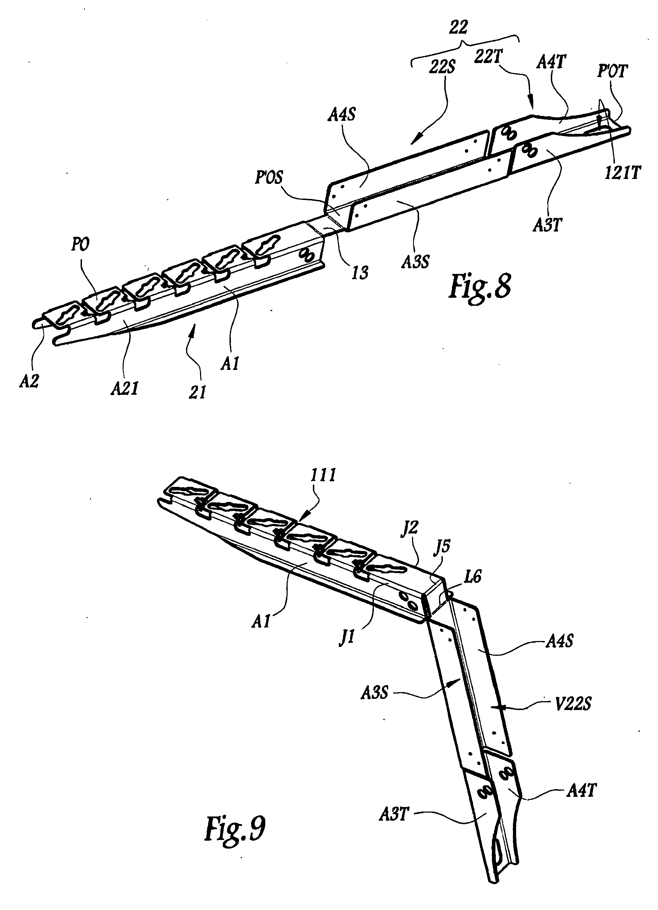

- les figures 8 à 11 sont des vues analogues respectivement aux figures 2, 3, 4 et 6, mais à plus petite échelle, pour une console réalisée à partir de l'ébauche de la figure 7,
- la figure 12 est une vue en perspective analogue à la figure 4, pour une console conforme à un troisième mode de réalisation, associée à un montant pourvu d'encoches,
- la figure 13 est une vue en perspective, selon un autre angle, de la console de la figure 12,
- la figure 14 est une vue en perspective analogue à la figure 4, pour une console conforme à un quatrième mode de réalisation de l'invention et
- la figure 15 est une vue en perspective, selon un autre angle, de la console de la figure 14.

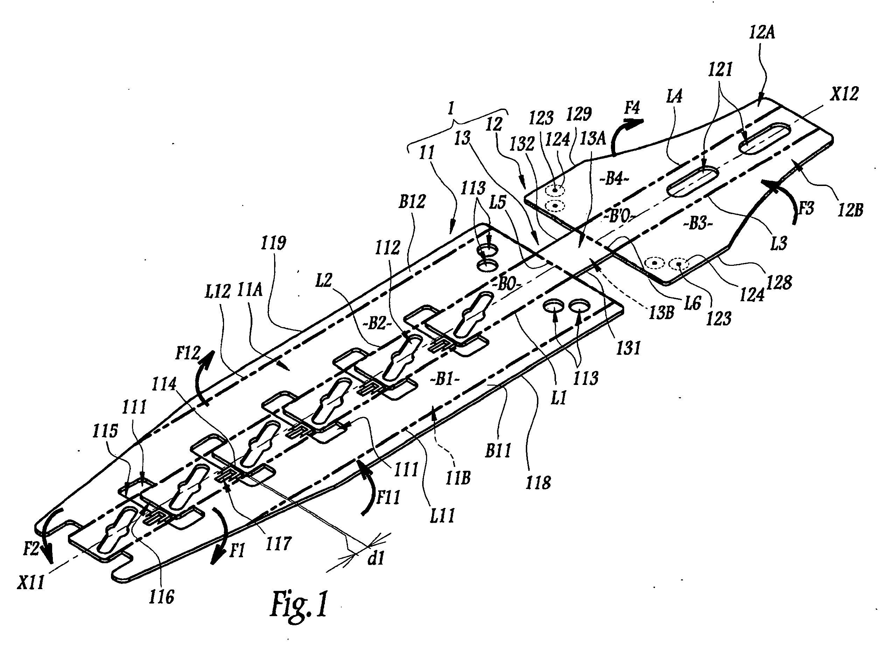

La figure 1 représente, en perspective, une ébauche réalisée par découpage d'un flanc de tôle galvanisée de dimensions habituelles, par exemple un flanc de tôle de longueur égale à 2 mètres environ et de largeur égale à 1 mètre environ. En variante, la tôle utilisée peut ne pas être galvanisée.

L'ébauche 1 peut également être obtenue par découpage dans un outil à suivre, ou « OAS », à partir d'un rouleau de feuillard de tôle. Dans ce cas, les opérations postérieures à la découpe sont automatisées et réalisées dans le même outil. La pièce sort alors finie de l'outil. La conception de la console de l'invention la rend compatible avec un tel mode de fabrication, ce qui augmente encore son intérêt en termes économiques.

L'ébauche 1 comprend une première partie 11 destinée à constituer un barreau de supportage, ainsi qu'une deuxième partie 12 destinée à constituer un talon d'accrochage sur une structure porteuse pour une console constituée à partir de l'ébauche 1. Une bande de liaison 13 relie les parties 12 et s'étend entre elles. On note respectivement X11 et X12 des axes longitudinaux et centraux des parties 11 et 12. Dans la configuration de la figure 1, les axes X11 et X12 sont alignés.

La partie 11 est pourvue de cinq encoches identiques 111 en forme de U centrées sur l'axe X11 et de six encoches identiques 112 de forme oblongue, avec une partie centrale élargie, inclinées par rapport à l'axe X11 et centrées sur celui-ci. La partie 11 est également pourvue de quatre ouvertures 113 ménagées, de part et d'autre de l'axe X11, au voisinage de la bande 13.

Chaque encoche 111 est équipée d'une languette de verrouillage 114 qui s'étend, à partir d'un bord 115 de l'encoche 111 perpendiculaire à l'axe X11, en direction du bord opposé 116 de cette encoche également perpendiculaire à l'axe X11. Chaque languette 114 est percée d'un orifice 117. Dans la configuration de la figure 1, chaque languette 114 s'étend à partir du bord 115 de l'encoche 111 qu'elle équipe, jusqu'à une distance d1 du bord 116 de l'ordre de quelques dixièmes de millimètres.

La deuxième partie 12 est, quant à elle, percée de deux ouvertures 121, oblongues, dont la plus grande dimension est parallèle à l'axe X12 et qui sont alignées le long de cet axe. La partie 12 est également pourvue de quatre orifices 123 disposés de façon symétrique par rapport à l'axe X12.

Une première ligne de pliage L1 et une deuxième ligne de pliage L2 sont définies dans la partie 11, parallèlement à l'axe X11, de part et d'autre de cet axe et à égale distance de celui-ci. Elles sont respectivement dans le prolongement des bords latéraux 131 et 132 de la bande de liaison 131.

On définit dans la partie 12 une troisième ligne de pliage L3 et une quatrième ligne de pliage L4 qui sont parallèles à l'axe X12 et disposées de part et d'autre de cet axe, à égale distance de celui-ci. Les lignes de pliage L3 et L4 sont également dans le prolongement des bords 131 et 132. Ainsi, dans la configuration de la figure 1 et à l'épaisseur de l'ébauche près et aux jeux fonctionnels près, les lignes de pliage L1 et L3 sont globalement alignées, alors que les lignes de pliage L2 et L4 sont globalement alignées.

On définit également une cinquième ligne de pliage L5 à la jonction entre la partie 11 et la bande 13. Cette ligne de pliage est perpendiculaire aux lignes de pliage L1 et L2. On définit en outre une sixième ligne de pliage L6 à la jonction entre la partie 12 et la bande 13. Cette sixième ligne de pliage est, quant à elle, perpendiculaire aux troisième et quatrième lignes de pliage L3 et L4 et parallèle à la cinquième ligne de pliage L5.

Deux lignes de pliage auxiliaires L11 et L12 sont également définies dans la partie 11, parallèlement à l'axe X11, de part et d'autre de celui-ci et à égale distance. Les lignes de pliage L11 et L12 sont parallèles aux première et deuxième lignes de pliage L1 et L2.

On note respectivement 118 et 119 les bords longitudinaux de la partie 11 situés, par rapport à l'axe X11, respectivement du côté des lignes de pliage L1 et L11 et du côté des lignes de pliage L2 et L12. De la même façon, on note 128 et 129 les bords longitudinaux de la partie 12 situés respectivement du côté des lignes de pliage L3 et L4 par rapport à l'axe X12.

On note B0 une bande définie dans la partie 11 entre les lignes L1 et L2. De la même façon, on note B'0 une bande définie dans la partie 12 entre les lignes L3 et L4.

On note B1 une bande définie dans la partie 11 entre la ligne de pliage L1 et le bord 118. De la même façon, on note B2 une bande définie dans la partie 11 entre la ligne L2 et le bord 119. On note B11 une bande définie dans la partie 11 entre la ligne de pliage L11 et le bord 118. La bande B11 constitue une partie de la bande B1. De la même façon, on note B12 une bande définie dans la partie 11, entre la ligne L12 et les bords 119, et qui constitue une partie de la bande B2.

On note B3 une bande définie dans la partie 12 entre la ligne L3 et le bord 128 et B4 une bande définie dans cette même partie 12 entre la ligne L4 et le bord 129.

On note respectivement 11A, 12A et 13A les faces des parties 11, 12 et 13 de l'ébauche 1 visibles à la figure 1. On note respectivement 11B, 12B et 13B les faces de ces parties qui ne sont pas visibles à la figure 1.

Dans la configuration de la figure 1, les parties 11, 12 et 13 sont dans le plan de l'ébauche 1. En d'autres termes, l'ébauche 1 est plane.

Lorsqu'il convient de fabriquer une console de supportage 20 à partir de l'ébauche 1, les bandes B1 et B2 sont rabattues, par rapport à la bande B0 qui demeure dans le plan de l'ébauche 1, respectivement dans le sens des flèches F1 et F2. Les bandes B1 et B2 sont ainsi pliées en direction de la même face 11 B de la partie 11 au niveau de la bande B0.

Par ailleurs, les bandes B11 et B12 sont respectivement pliées, par rapport aux bandes B1 et B2, dans le sens des flèches F11 et F12, c'est-à-dire dans une direction opposée par rapport au pliage dans le sens des flèches F1 et F2, puisque les bandes B11 et B12 sont rabattues en direction de la face 11A de la partie 11.

Par ailleurs, les bandes B3 et B4 sont rabattues, par rapport à la bande B'0, dans le sens des flèches F3 et F4, c'est-à-dire du côté de la surface 12A au niveau dé la bande B'0 qui demeure dans le plan de l'ébauche 1. En d'autres termes, les bandes B3 et B4 sont rabattues autour des lignes de pliage L3 et L4 en direction d'une face de l'ébauche opposée à celle en direction de laquelle sont rabattues les bandes B1 et B2. Les bandes B3 et B4 sont donc pliées autour des lignes de pliage L3 et L4 dans une direction opposée à la direction de pliage des bandes B1 et B2 autour des lignes de pliage L1 et L2.

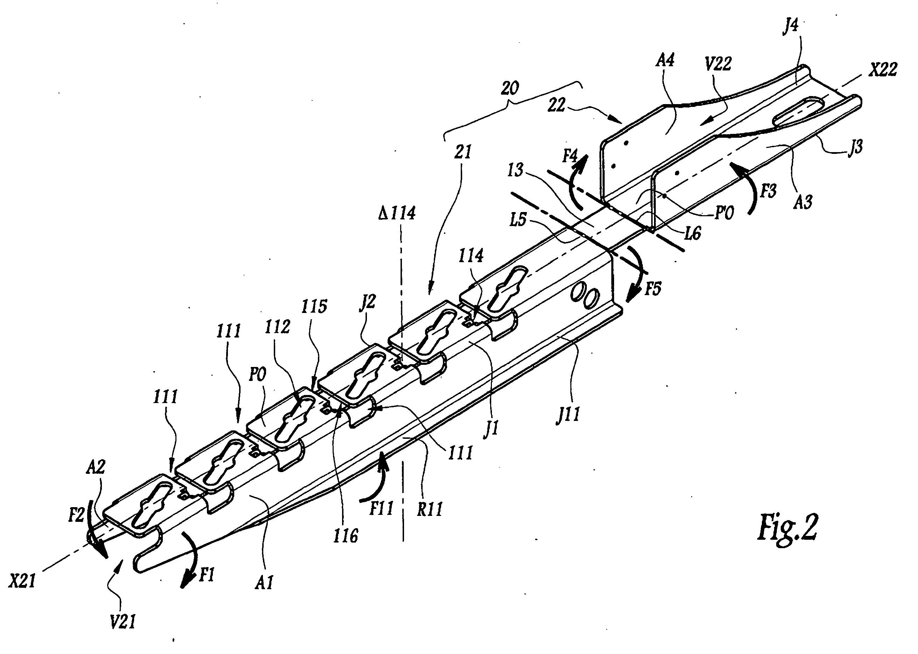

On parvient ainsi dans la configuration de la figure 2 dans laquelle un barreau 21 est formé par la partie 11 de l'ébauche 1. Ce barreau s'étend le long d'un axé longitudinal X21 et comprend un plateau plan P0 formé par la bande B0 de l'ébauche 1 ainsi que deux ailes A1 et A2 respectivement formées par les bandes B1 et B2 de l'ébauche 1.

Lors de l'opération de mise en forme du barreau 1, les languettes 114 sont rabattues en direction de la face 11 B de la partie 11, c'est-à-dire vers le volume intérieur V21 du barreau 21 défini entre les ailes A1 et A2, en dessous du plateau P0 à la figure 2. Les languettes 114 s'étendent alors chacune dans une direction perpendiculaire à l'axe X21 et représentée par la droite Δ₁₁₄ à la figure 2.

En variante, chaque encoche 111 peut être équipée de plusieurs languettes 114 ou certaines encoches 111 peuvent être dépourvues de languette.

Une première arête de jonction rectiligne J1 est définie entre le plateau P0 et l'aile A1, alors qu'une deuxième arête de jonction rectiligne J2 est définie entre le plateau P0 et l'aile A2. Ces arêtes de jonction J1 et J2 sont parallèles entre elles et à l'axe X21. Elles sont formées dans une zone correspondant approximativement à l'emplacement des lignes de pliage L1 et L2 sur l'ébauche 1.

Une arête de jonction entre deux parties planes de la console 20 est une zone dans laquelle l'ébauche 1 est pliée, entre ces deux parties planes. Une arête de jonction peut être continue, ou discontinue, comme les arêtes J1 et J2 qui sont interrompues par les encoches 111.

Les parties du barreau 21 les plus proches des bords 118 et 119 de la partie 11 constituent des rabats dont un seul est visible sur les figures, avec la référence R11. Ces rabats permettent de rigidifier le barreau 21 et sont reliées aux ailes A1 et A2 par des arêtes de jonction, dont une seule est visible sur les figures, avec la référence J11.

Après que les bandes B3 et B4 ont été rabattues dans le sens des flèches F3 et F4, la partie 12 de l'ébauche 1 constitue un talon 22 qui s'étend selon un axe longitudinal X22 superposé avec l'axe X12 de la partie 12 et qui est à section en U à fond plat, avec une paroi de fond P'0 et deux ailes latérales A3 et A4 qui définissent entre elles un volume V22. Deux arêtes de jonction continues et rectilignes J3 et J4 sont respectivement définies entre la plaque de fond P'0 et les ailes A3 et A4.

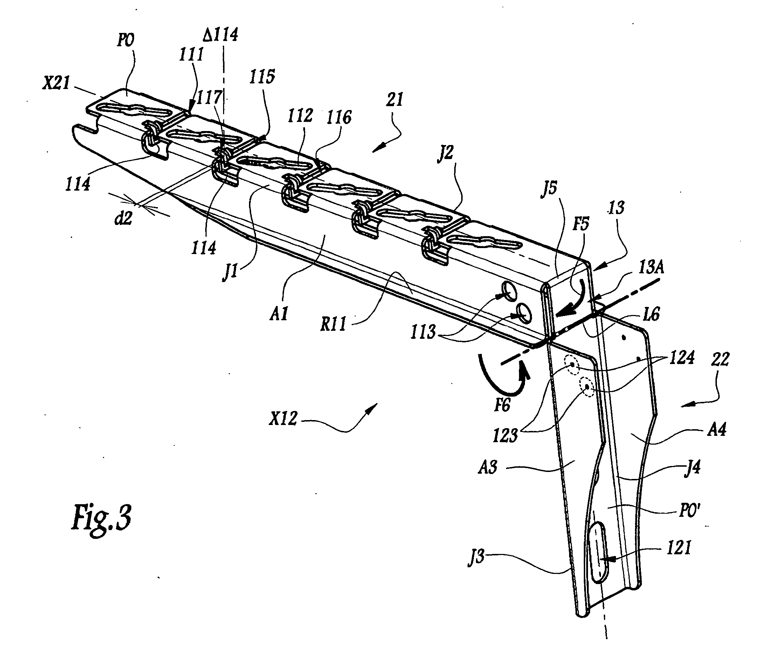

A partir de la configuration de la figure 2, la bande de jonction 13 est pliée autour de la ligne de pliage L5 dans le sens de la flèche F5, ce qui a pour effet d'amener la console 20 en cours de fabrication dans la configuration de la figure 3 où les axes X21 et X22 sont perpendiculaires, alors qu'ils sont parallèles dans la configuration de la figure 2.

On relève que les opérations de pliage dans le sens des flèches F1, F2, F3, F4, F5, F11 et F12 sont effectuées avec une amplitude de 90 ° environ.

Dans la configuration de la figure 3, une arête de jonction rectiligne J5 est définie entre le plateau de fond P0 et la bande de liaison 13.

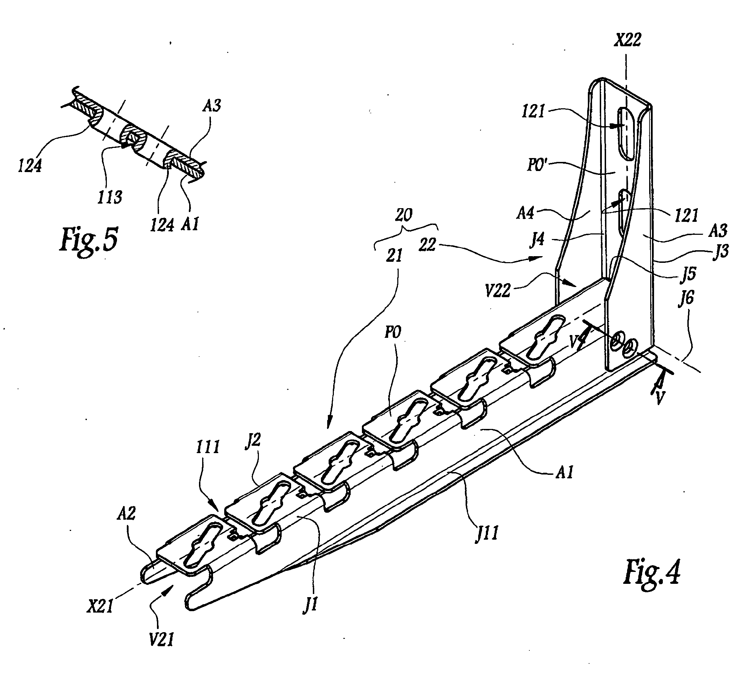

A partir de cette configuration, le talon 22 est rabattu autour de la ligne de pliage L6, dans le sens de la flèche F6 à la figure 3, sur une amplitude angulaire de 180° environ, ce qui a pour effet de plaquer la plaque de fond P'0 contre la face 13A de la bande de liaison 13, en amenant les ailes A3 et A4 de part et d'autre des ailes A1 et A2, jusque dans la configuration de la figure 4. Dans cette configuration, la partie du barreau 21 la plus proche de la bande 13 est engagée dans le volume V22.

Dans cette configuration, une sixième arête de jonction J6 est formée entre les parties 13 et P'0 de la console 20. Cette arête de jonction est repérée par un trait d'axe qui la prolonge à la figure 4.

Le barreau 21 et le talon 22 sont ensuite immobilisés en position l'un par rapport à l'autre dans la configuration de la figure 4 au moyen d'une opération de sertissage ou clinchage dans laquelle les ailes A3 et A4 du talon 22 sont déformées localement, de façon plastique, au voisinage des orifices 123 de la partie 12, de façon à engager et immobiliser dans les ouvertures 113 une zone de bord 124 définie autour de chaque orifice 123, comme représenté à la figure 5. Cette opération de sertissage ou clinchage garantit une immobilisation pérenne des parties constitutives 21 et 22 de la console 20, l'une par rapport à l'autre. Cette opération de sertissage ou clinchage peut être réalisée dans la machine de découpage et pliage utilisée pour les étapes précédentes de fabrication de la console 20.

En variante, les parties 21 et 22 de la console 20 peuvent être immobilisées l'une par rapport à l'autre par boulonnage ou soudage.

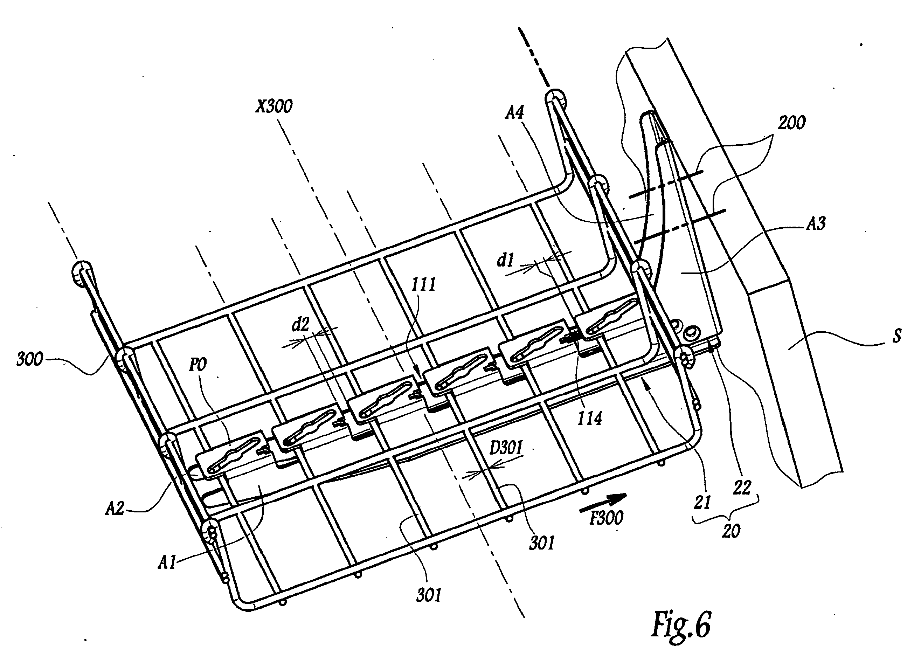

Comme représenté à la figure 6, en configuration d'utilisation, le talon 22, qui est rectiligne et rigide, est utilisé pour immobiliser la console 20 par rapport à une structure porteuse S telle qu'un mur d'un bâtiment industriel. Pour ce faire, des vis 200, représentées par leurs traits d'axe, sont engagées dans les ouvertures 121 du talon 22.

Dans cette configuration, une goulotte 300 de chemin de câbles, dont on note X300 l'axe longitudinal, peut être montée sur le barreau 21 en engageant les fils de chaîne 301 de son fond dans les encoches 114 du barreau 21, ces fils étant parallèles à l'axe X300. Ceci est possible car, après que les ailes A1 et A2 ont été constituées en rabattant les bandes B1 et B2 comme expliqué ci-dessus, les encoches 113 s'étendent à la fois dans le plateau de fond P0 et dans les ailes A1 et A2.

On note D301 le diamètre des fils 301. La distance entre les bords 115 et 116 des encoches 112 est choisie strictement supérieure au diamètre D301. Plus particulièrement, dans la configuration des figures 2 à 4, chaque languette 114, qui est rabattue parallèlement à la droite Δ₁₁₄ et perpendiculairement à l'axe X21, s'étend, à une distance d2 du bord 116 de l'encoche 112 qu'elle borde, qui est supérieure au diamètre D301. En d'autres termes, dans cette configuration, les languettes 114 ne gênent pas la mise en place des fils de chaîne 301 dans les encoches 111, car la distance d2 est supérieure au diamètre D301.

Lorsque les fils 301 ont été engagés dans les encoches 111, la goulotte 300 est déplacée en direction du talon 22, dans le sens de la flèche F300 à la figure 6, c'est-à-dire parallèlement à l'axe X21 et perpendiculairement à l'axe X300. Chaque languette 114 peut alors être ramenée dans la configuration de la figure 1 par rapport aux bords 115 et 116 de l'encoche 112 qu'elle équipe, en engageant la pointe d'un tournevis ou un outil correspondant dans son orifice central 117.

Ainsi, chaque languette 114 peut être amenée dans la configuration de celle représentée sur la droite de la figure 6 où elle s'étend à la distance d1 du bord 116 opposé. Cette distance d1 étant strictement inférieure au diamètre D301, la languette 114 retient alors efficacement le fil 301 de la goulotte 300 dans l'encoche 112 considérée.

Cette opération peut être répétée pour certaines ou toutes les autres languettes 114 visibles à la figure 6.

Une fois la goulotte 300 ainsi immobilisée sur la console 20, des câbles électriques ou d'autres matériels analogues, tels que des tuyaux, peuvent être disposés dans la console, globalement selon son axe longitudinal X300 et le poids de ces matériels est efficacement supporté par la console 20 dont la stabilité mécanique est assurée par l'emboîtement d'une partie du barreau 21 dans le volume V22 et la solidarisation au niveau des ouvertures 113 et des orifices 123.

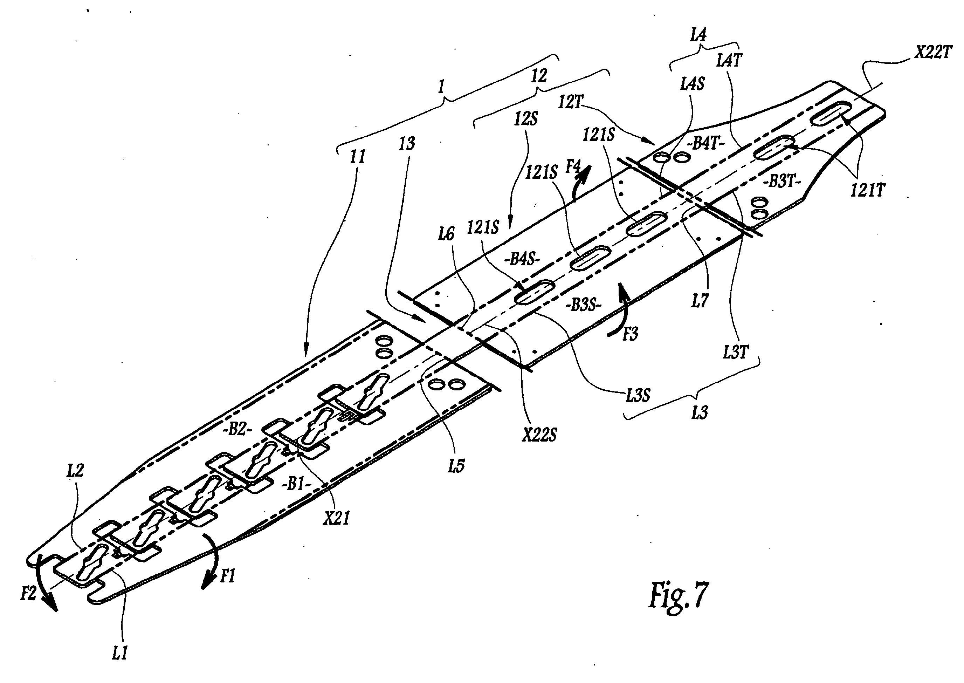

Dans les deuxième, troisième et quatrième modes de réalisation de l'invention représentés aux figures 7 et suivantes, les éléments analogues à ceux du premier mode de réalisation portent les mêmes références. Dans ce qui suit, on décrit principalement ce qui distingue ces modes de réalisation du précédent. Pour le reste, ces modes de réalisation sont analogues au premier.

Dans ce deuxième mode de réalisation, le talon 22 est bipartite est formé de deux segments 22S et 22T eux-mêmes constitués à partir de deux segments 12S et 12T d'une partie d'ébauche 12 équivalente à la partie 12 du premier mode de réalisation. En utilisant les mêmes notations que pour ce qui concerne le premier mode de réalisation, des première et deuxième lignes de pliage L1 et L2 sont définies dans la première partie 11 de l'ébauche 1, des troisième et quatrième lignes de pliage L3 et L4 sont définies dans la partie 12, respectivement avec un segment L3S ménagé dans le segment 12S, un segment L3T ménagé dans le segment 12T, un segment L4S ménagé dans le segment 12S et un segment L4T ménagé dans le segment 12T.

Les références des portions du talon 22 et de la partie 12 portent le suffixe S ou T selon qu'elles appartiennent aux segments 12S et 22S ou aux segments 12T et 22T. On définit en particulier des ailes A3S, A4S, A3T et A4T de façon comparable aux ailes A3 et A4 du premier mode de réalisation. En particulier, on note respectivement X22S et X22T les axes longitudinaux des segments 22S et 22T. Des ouvertures 121S et 121T de passage de moyens de fixation sont respectivement prévues dans les segments 22S et 22T.

Des cinquième et sixième lignes de pliage L5 et L6 sont définies comme dans le premier mode de réalisation et la ligne de pliage L6 est définie à la jonction entre le segment 12S et une bande de liaison 13. Une septième ligne de pliage L7 est définie à la jonction entre les segments 12S et 12T. Elle est parallèle aux cinquième et sixième lignes de pliage.

Lors de la mise en forme de la console 20 de ce mode de réalisation, le barreau 21 est constitué comme dans le premier mode de réalisation en rabattant des bandes B1 et B2 définies comme dans le premier mode de réalisation dans le sens des flèches F1 et F2. Le talon 22 est constitué en rabattant des bandes B3S, B3T, B4S et B4T définies comme dans le premier mode de réalisation, dans le sens des flèches F3 et F4. On relève que les bandes B3S, B3T, B4S et B4T des segments 12S et 12T sont rabattues dans la même direction, qui est opposée à la direction selon laquelle sont rabattues les bandes B1 et B2 appartenant à la partie 11 de l'ébauche 1.

Lors de la mise en forme de la console 20, en plus du positionnement et de l'immobilisation du segment 22S par rapport au barreau 21, on rabat le segment 22T autour de la septième ligne de pliage L7, en formant une arête de jonction J7. L'amplitude du mouvement autour de la ligne de pliage J7 est de 90° environ.

Lors de ce mouvement, les ailes latérales A3T et A4T du segment 22T sont engagées entre les ailes latérales A3S et A4S du segment 22S, c'est-à-dire dans le volume V22S de ce segment. Les segments 22S et 22T sont immobilisés l'un par rapport à l'autre par sertissage ou clinchage, comme expliqué ci-dessus au sujet des éléments 21 et 22 du premier mode de réalisation, cette technique étant également utilisée pour l'immobilisation du segment 22S par rapport au barreau 21.

Dans ce mode de réalisation, on utilise également les encoches 111 du barreau 21 pour recevoir et retenir les fils de chaîne 301 de la goulotte 300 grâce aux languettes 114.

En variante, dans les deux modes de réalisation, notamment dans le cas d'une goulotte en tôle, les encoches 112 peuvent être utilisées conjointement avec des boulons ou des rivets. D'autres modes de montage de la goulotte sur la console sont envisageables.

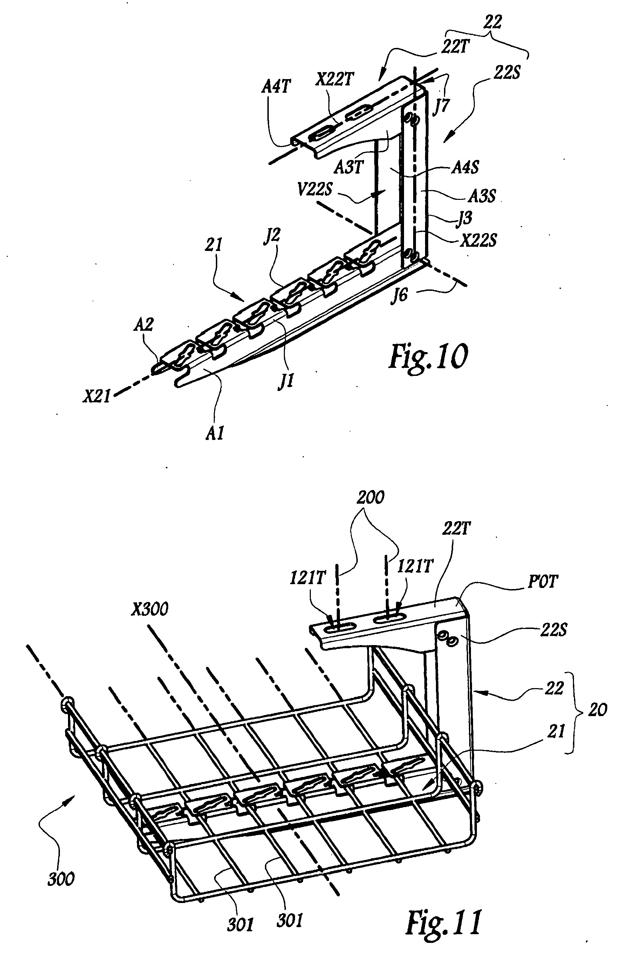

Comme représenté à la figure 11, la console 20 de ce mode de réalisation permet de suspendre une goulotte 300 de chemin de câbles par rapport à une structure porteuse formée par le plafond non représenté d'un bâtiment, au moyen de vis 200 représentées par leur trait d'axe.

En configuration finale, prête à l'emploi, de la console 20 représentée à la figure 10, les axes X21 et X22S sont perpendiculaires, les axes X22S et X22T sont perpendiculaires et les axes X21 et X22T sont parallèles.

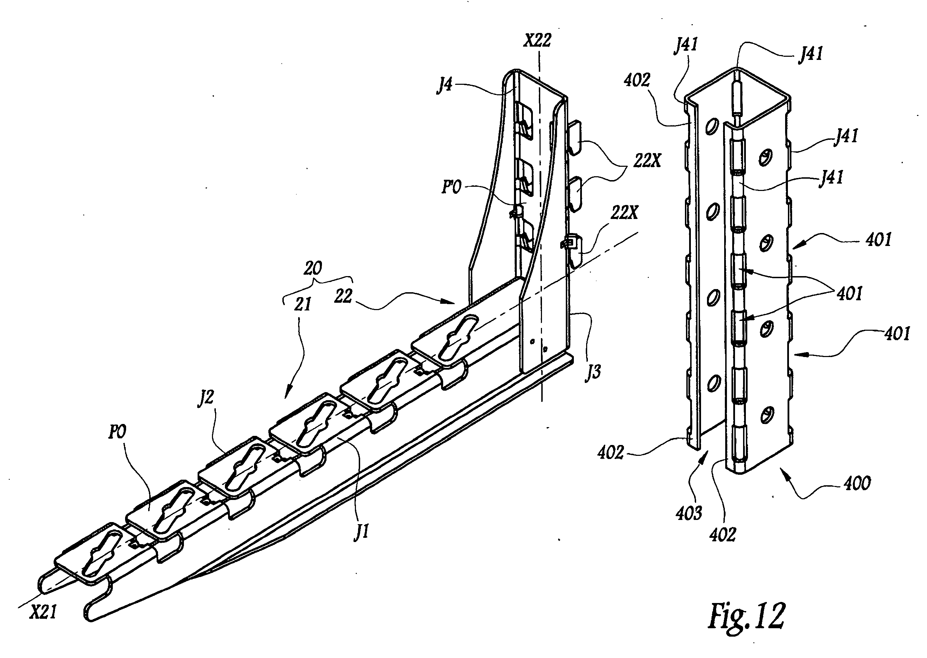

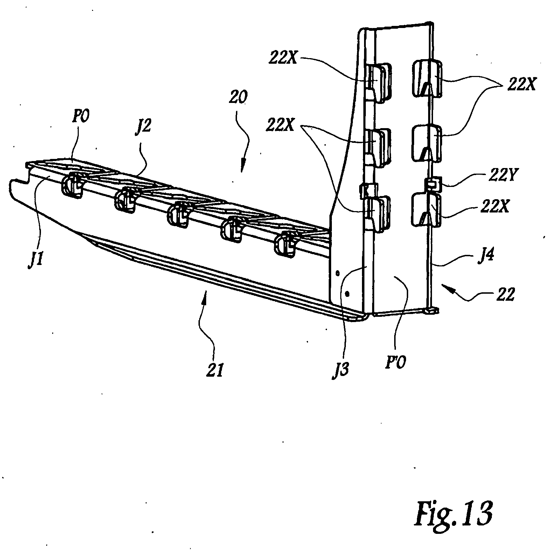

Dans le troisième mode de réalisation des figures 12 et 13, la console 20 est destinée à être utilisée conjointement avec un montant 400 pourvu d'encoches 401 ménagées dans des arêtes rectilignes J41 de jonction entre ses faces latérales ou entre une face latérale et une bordure 402 d'une ouverture longitudinale 403 du montant 400.

Le barreau 21 de la console 20 est identique à celui du premier mode de réalisation, alors que son talon 22 est équipé de languettes 22X obtenues par découpage de la plaque de fond P'0 du talon 22 et destinées à être engagées dans les encoches 401, conformément à l'enseignement technique de FR-A-2 887 610. Les languettes 22X s'étendent à partir des troisième et quatrième arêtes de jonction J3 et J4 du talon 22, à l'opposé du barreau 21.

A proximité de certaines des languettes 22X sont prévus des doigts de verrouillage 22Y qui sont déformables plastiquement entre une position dégagée représentée sur les figures 12 et 13 et une position engagée où ils pénètrent dans l'une des encoches 401, au côté d'une languette 22X, au point de verrouiller la languette dans l'encoche par coopération de formes.

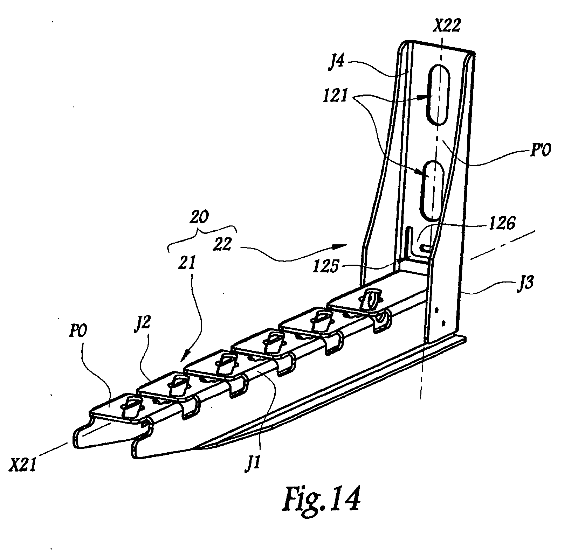

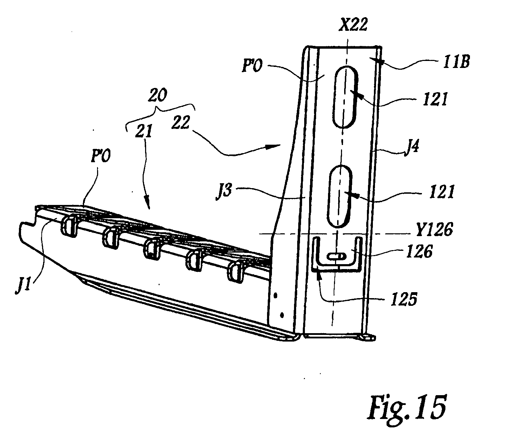

Dans le quatrième mode de réalisation de l'invention représenté aux figures 14 et 15, la plaque de fond P'0 du talon 22 est équipée, au-dessous des ouvertures 121, d'une lumière en U 125 qui délimite une languette 126 pouvant être rabattue selon un axe Y126 perpendiculaire à l'axe longitudinal X22 du talon 22.

Lorsqu'elle est rabattue de 90° vers le haut, du côté de la face 11B du talon 22 visible à la figure 15, la languette 126 constitue un moyen de blocage en rotation de la console 20 autour d'une vis engagée dans l'une des ouvertures 121. Plus précisément, dans la cas où la console 20 est associée à un montant pourvu d'une ouverture longitudinale telle que l'ouverture 403 du montant 400 de la figure 12, avec le talon 22 en appui sur les bordures 402, une vis peut traverser l'une des ouvertures 121, alors que la languette 126 est engagée dans l'ouverture 403, en empêchant ainsi la console 15 de basculer autour de l'axe de la vis, alors horizontal.

Selon une variante non représentée de l'invention, le plateau P0 et/ou la plaque P'0 peuvent être de largeur non constante, auquel cas les lignes L1 et L2, d'une part, L3 et L4, d'autres part, ne sont pas parallèles. Les arêtes J1 et J2, J3 et J4 ne sont alors pas parallèles.

Quel que soit le mode de réalisation, les arêtes de jonction J1 à J6 et éventuellement J7 sont rectilignes et s'étendent globalement au niveau des lignes de pliage L1 à L6 et éventuellement L6, respectivement.

Dans la présente description et dans les revendications ci-jointes, lorsqu'une direction de pliage est mentionnée, il s'agit de la direction de mouvement de la partie pliée ou rabattue, indépendamment de l'orientation de l'angle de pliage. Ainsi, par exemple, les mouvements des bandes B1 et B2 selon les flèches F1 et F2 entre les configurations des figures 1 et 2 sont dans la même direction, à savoir vers la face 11 B du plateau P0, alors que les angles de pliage sont de signes opposés.

Les caractéristiques techniques des modes de réalisation et variantes mentionnés ci-dessus peuvent être combinées entre elles, en totalité ou en partie.

## Revendications

1. Console (20) de supportage pour une goulotte (300) de chemin de câbles ou analogue, cette console étant formée par découpage et pliage de tôle et comprenant :
- un barreau (21) destiné à recevoir en appui la goulotte, qui s'étend selon un premier axe longitudinal (X21) et qui est à section transversale en forme de U à fond plat, avec un plateau de fond (P0) et deux ailes latérales planes (A1, A2)
- un talon (22) de montage du barreau sur une structure porteuse (S), qui s'étend au moins en partie selon un deuxième axe longitudinal (X22 ; X22T) perpendiculaire au premier axe longitudinal et qui est à section transversale en forme de U à fond plat, avec une paroi de fond (P'0 ; P'0S, P'0T) et deux ailes planes (A3, A4 ; A3S, A4S, A3T, A4T)
dans laquelle
- les ailes du barreau et les ailes du talon sont en recouvrement partiel et solidarisées entre elles dans leurs zones de recouvrement
- les ailes (A1, A2) du barreau sont rabattues, par rapport au plateau de fond (P0) et au niveau de première et deuxième arêtes rectilignes (J1, J2) de jonction avec le plateau de fond, selon une première direction (F1, F2),
- les ailes (A3, A4) du talon (22) sont rabattues, par rapport à la paroi de fond (P'0) et au niveau de troisième et quatrième arêtes rectilignes (J3, J4) de jonction avec la paroi de fond, selon une deuxième direction (F3, F4)
**caractérisée en ce que**
- le barreau (21) et le talon (22) sont monobloc, découpés dans un même flanc de tôle et reliés par une bande de liaison (13)
- la deuxième direction (F3, F4) est opposée à la première direction (F1, F2),
- la bande de liaison (13) est rabattue, par rapport au plateau de fond (P0) et à la plaque de fond (P'0) et au niveau de cinquième et sixième arêtes parallèles et rectilignes (J5, J6) de jonction, respectivement avec le plateau de fond et avec la paroi de fond, selon deux directions opposées (F5, F6).

2. Console selon la revendication 1, **caractérisée en ce que** les première et deuxième arêtes de jonction (J1, J2) sont parallèles entre elles, les troisième et quatrième arêtes de jonction (J3, J4) sont parallèles entre elles et les cinquième et sixième arêtes de jonction (J5, J6) sont perpendiculaires aux première, deuxième, troisième et quatrième arêtes.

3. Console selon l'une des revendications précédentes, **caractérisée en ce que** le barreau (21) est pourvu d'au moins une encoche (111) de réception d'un fil de chaîne (301) de la goulotte et **en ce que** cette encoche s'étend à la fois dans le plateau de fond (P0) et dans au moins une aile (A1, A2) du barreau.

4. Console selon la revendication 3, **caractérisée en ce qu'**au moins un premier bord (115) de l'encoche (111) situé au niveau du plateau de fond (P0) est pourvu d'au moins une languette (114) de verrouillage d'un fil de chaîne (301), déformable entre :
- une première configuration dans laquelle la languette (114) est rabattue selon une direction (Δ₁₁₄) perpendiculaire à l'axe longitudinal (X21) du barreau et s'étend, par rapport à un deuxième bord (116) de cette encoche, à une première distance (d2), mesurée parallèlement à l'axe longitudinal du barreau, strictement supérieure au diamètre (D301) du fil de chaîne (301), et
- une deuxième configuration dans laquelle la languette (114) s'étend selon un direction parallèle ou globalement parallèle à l'axe longitudinal (X21) du barreau, en direction du deuxième bord (116) de l'encoche, à une deuxième distance (d1) de ce deuxième bord, mesurée parallèlement à l'axe longitudinal du barreau, strictement inférieure au diamètre du fil de chaîne.

5. Console selon l'une des revendications précédentes, **caractérisée en ce que** dans leur zone de recouvrement partiel, les ailes (A1, A2) du barreau (21) et les ailes (A3, A4) du talon (22) sont solidarisées par sertissage, boulonnage ou soudage.

6. Console selon l'une des revendications précédentes, **caractérisée en ce que** le talon (22) est rectiligne et rigide et **en ce que** sa paroi de fond (P'0) est percée d'au moins une ouverture (121) de passage d'un moyen (200) de fixation de la console (20) sur une structure porteuse (S).

7. Console selon l'une des revendications 1 à 5, **caractérisée en ce que**
- le talon (22) est formé d'un premier segment (22S) et d'un deuxième segment (22T),
- le premier segment (22S) est relié à la bande de liaison (13) par la sixième arête de jonction (J6),
- les premier et deuxième segments (22S, 22T) sont reliés entre eux par une septième arête de jonction (J7),
- la paroi de fond (P'0T) du deuxième segment (22T) est percée d'au moins une ouverture (121T) de passage d'un moyen de fixation sur une structure porteuse, et
- les ailes (A3S, A4S, A3T, A4T) des premier et deuxième segments sont en recouvrement partiel et solidarisées entre elles au niveau de leur zone de recouvrement.

8. Console selon l'une des revendications précédentes, **caractérisée en ce que** le talon (22) est pourvu, au niveau des troisième et quatrième arêtes rectilignes de jonction (J3, J4), de languettes (22X) d'accrochage sur un montant (400).

9. Console selon l'une des revendications précédentes, **caractérisée en ce que** le talon (22) est pourvu, au niveau de la plaque de fond (P'0), d'une découpe (125) définissant une languette (126) rabattable autour d'un axe (Y126) perpendiculaire au deuxième axe longitudinal (X22).

10. Tronçon de chemin de câbles comprenant au moins une goulotte (300) définissant un chemin pour de câbles ou des matériels analogues et au moins une console selon l'une des revendications précédentes.

11. Procédé de fabrication d'une console (20) de supportage pour une goulotte (300) de chemin de câbles ou analogue, par découpage et pliage d'un flanc de tôle, cette console comprenant :
- un barreau (21) destiné à recevoir en appui la goulotte (300), qui s'étend selon un premier axe longitudinal (X21) et qui est à section transversale en forme de U à fond plat, avec un plateau de fond (P0) et deux ailes latérales planes (A1, A2),
- un talon (22) de montage du barreau sur une structure porteuse (S), qui s'étend au moins en partie selon un deuxième axe longitudinal (X22 ; X22S) perpendiculaire au premier axe longitudinal et qui est à section transversale en forme de U à fond plat, avec une paroi de fond (P'0 ; POS, P'OT) et deux ailes planes (A3, A4 ; A3S, A4S, A3T, A4T),
ce procédé comprenant des étapes consistant à :
a) former une ébauche (1) de console définissant une première partie de barreau (11) et une deuxième partie de talon (12)
b) rabattre des portions (B1, B2) de la première partie destinées à former les ailes (A1, A2) du barreau (21), par rapport au plan de l'ébauche dans lequel se trouve le plateau de fond (P0), autour d'une première et d'une deuxième lignes de pliage (L1, L2) et selon une première direction (F1, F2),
c) rabattre des portions (B3, B4 ; B3S, B4S, B3T, B4T) de la deuxième partie destinées à former les ailes (A3, A4) du talon (22), par rapport au plan de l'ébauche dans lequel se trouve la paroi de fond (P'0), autour d'une troisième et d'une quatrième lignes de pliage (L3, L4 ; L3S, L4S, L3T, L4T) et selon une deuxième direction (F3, F4)
e) solidariser entre elles, dans leur zone de recouvrement partiel, les ailes du barreau et les ailes du talon
**caractérisé en ce que**
- l'ébauche de console (1) est monobloc et formée, lors de l'étape a), par découpage d'un même flanc de tôle et cette ébauche définit une bande (13) de liaison entre la première partie de barreau (11et la deuxième partie de talon (12)
- la deuxième direction (F3, F4) est opposée à la première direction (F1, F2) et
- le procédé comprend une étape d) antérieure à l'étape e) et consistant à rabattre la bande de liaison (13), par rapport au plan de l'ébauche, respectivement autour de cinquième et sixième lignes de pliage (L5, L6) parallèles entre elles, et selon deux directions (F5, F6) opposées, en amenant les ailes du barreau et les ailes du talon en recouvrement partiel.

12. Procédé selon la revendication 11, **caractérisé en ce que**, lors de l'étape e), les ailes (A1-A4 ; A1-A4T) sont solidarisées entre elles par sertissage au sein de la machine dans laquelle sont réalisées les étapes a) et e).

## Patentansprüche

1. Trägerkonsole (20) für eine Kabelwegrinne (300) oder dergleichen, wobei diese Konsole durch Stanzen und Biegen eines Blechs gebildet wird und umfasst:
- einen Stab (21), der vorgesehen ist, die Rinne in Auflage aufzunehmen und der sich gemäß einer ersten Längsachse (X21) erstreckt und einen Querschnitt in Form eines U mit flachem Verbindungsschenkel aufweist, mit einer Bodenfläche (P0) und zwei ebenen Seitenschenkeln (A1, A2)
- einen Ansatz (22) zur Montage des Stabes an einer Trägerstruktur (S), der sich zumindest teilweise gemäß einer zweiten Längsachse (X22; X22T), senkrecht zur ersten Längsachse erstreckt und der einen Querschnitt in Form eines U mit flachem Verbindungsschenkel aufweist, mit einer Bodenwand (P'0; P'0S, P'0T und zwei ebenen Seitenschenkeln (A3, A4; A3S, A4S, A3T, A4T),
bei der
- die Schenkel des Stabes und die Schenkel des Ansatzes in teilweiser Überdeckung sind und untereinander an ihren Überdeckungszonen verbunden sind
- die Schenkel (A1, A2) des Stabes in Bezug auf die Bodenfläche (70) und an einer ersten und zweiten geradlinigen Kante (J1, J2) zur Verbindung mit der Bodenfläche gemäß einer ersten Richtung (F1, F2) umgebogen sind,
- die Schenkel (A3, A4) des Ansatzes (22) in Bezug auf die Bodenwand (P'0) und an einer dritten und vierten geradlinigen Kante (J, J4) zur Verbindung mit der Bodenwand gemäß einer zweiten Richtung (F3, F4) umgebogen sind,
**dadurch gekennzeichnet, dass**
- der Stab (21) und der Ansatz (22) aus einem Stück hergestellt sind, aus einem selben Blechabschnitt gestanzt sind und miteinander durch ein Verbindungsband (13) verbunden sind
- die zweite Richtung (F3, F4) entgegengesetzt zur ersten Richtung (F1, F2) ist,
- das Verbindungsband (13) in Bezug auf die Bodenfläche (P0) und die Bodenwand (P'0) und an einer fünften und sechsten parallelen und geradlinigen Kante (J5, J6) jeweils zur Verbindung mit der Bodenfläche und der Bodenwand gemäß zwei entgegengesetzten Richtungen (F5, F6) umgebogen sind.

2. Konsole nach Anspruch 1, **dadurch gekennzeichnet, dass** die erste und die zweite Verbindungskante (J1, J2) zueinander parallel sind, die dritte und vierte Verbindungskante (J3, J4) zueinander parallel sind und die fünfte und sechste Verbindungskante (J5, J6) senkrecht zur ersten, zweiten, dritten und vierten Kante sind.

3. Konsole nach einem der vorhergehenden Ansprüche, **dadurch gekennzeichnet, dass** der Stab (21) mit mindestens einer Aussparung (111) zur Aufnahme eines Kettdrahts (301) der Rinne versehen ist und dass diese Aussparung sich sowohl in der Bodenfläche (P0) als auch in mindestens einem Schenkel (A1, A2) des Stabes erstreckt.

4. Konsole nach Anspruch 3, **dadurch gekennzeichnet, dass** mindestens ein erster Rand (115) der Aussparung (111), der in der Bodenfläche (P0) liegt, mit mindestens einer Verriegelungszunge (114) für einen Kettdraht (301) versehen ist, die verformbar ist zwischen:
- einer ersten Konfiguration, in der die Zunge (114) gemäß einer Richtung (A₁₁₄) senkrecht zur Längsachse (X21) des Stabes umgebogen ist und sich in Bezug auf einen zweiten Rand (116) dieser Aussparung in einem ersten Abstand (d2), der parallel zur Längsachse des Stabes gemessen ist, streng größer als der Durchmesser (D301) des Kettdrahtes (301) erstreckt, und
- einer zweiten Konfiguration, in der die Zunge (114) sich gemäß einer Richtung parallel oder im Wesentlichen parallel zur Längsachse (X21) des Stabs in Richtung des zweiten Rands (116) der Aussparung in einem zweiten Abstand (d1) zu diesem zweiten Rand, gemessen parallel zur Längsachse des Stabs, streng kleiner als der Durchmesser des Kettdrahts erstreckt.

5. Konsole nach einem der vorhergehenden Ansprüche, **dadurch gekennzeichnet, dass** die Schenkel (A1, A2) des Stabs (21) und die Schenkel (A3, A4) des Ansatzes (22) in ihrer Zone der teilweisen Überdeckung durch Bördeln, Verschrauben oder Verschweißen verbunden sind.

6. Konsole nach einem der vorhergehenden Ansprüche, **dadurch gekennzeichnet, dass** der Ansatz (22) geradlinig und starr ist und dass seine Bodenwand (P0) von mindestens einer Öffnung (121) zum Durchgang eines Befestigungsmittels (200) der Konsole (20) an der Trägerstruktur (S) durchgriffen ist.

7. Konsole nach einem der Ansprüche 1 bis 5, **dadurch gekennzeichnet, dass**
- der Ansatz (22) aus einem ersten Segment (22S) und einem zweiten Segment (22T) gebildet ist,
- das erste Segment (22S) mit dem Verbindungsband (13) über die sechste Verbindungskante (J6) verbunden ist,
- das erste und zweite Segment (225, 22T) untereinander durch eine siebente Verbindungskante (J7) verbunden sind,
- die Bodenwand (P'0T) des zweiten Segments (22T) von mindestens einer Öffnung (121T) für den Durchgang eines Befestigungsmittels an der Trägerstruktur durchgriffen ist und
- die Schenkel (A3S, A4S, A3T, A4T) des ersten und zweiten Segments in teilweiser Überdeckung sind und miteinander an ihrer Überdeckungszone verbunden sind.

8. Konsole nach einem der vorhergehenden Ansprüche, **dadurch gekennzeichnet, dass** der Ansatz (22) an der dritten und vierten geradlinigen Verbindungskante (J3, J4) mit Zungen (22X) zum Befestigen an einer Stütze (440) versehen ist.

9. Konsole nach einem der vorhergehenden Ansprüche, **dadurch gekennzeichnet, dass** der Ansatz (22) an der Bodenwand (P'0) mit einem Ausschnitt (125) versehen ist, der eine Zunge (126) begrenzt, die um eine Achse (Y126) senkrecht zur zweiten Längsachse (X22) umbiegbar ist.

10. Abschnitt eines Kabelweges, der mindestens eine Rinne (300), die einen Weg für die Kabel oder dergleichen Materialien definiert, und mindestens eine Konsole nach einem der vorhergehenden Ansprüche umfasst.

11. Verfahren zur Herstellung deiner Konsole (20) zum Abstützen einer Rinne (300) eines Kabelweges oder dergleichen durch Stanzen und Biegen eines Blechabschnitts, wobei diese Konsole umfasst:
- einen Stab (21), der vorgesehen ist, die Rinne in Auflage aufzunehmen und der sich gemäß einer ersten Längsachse (X21) erstreckt und einen Querschnitt in Form eines U mit flachem Verbindungsschenkel aufweist, mit einer Bodenfläche (P0) und zwei ebenen Seitenschenkeln (A1, A2)
- einen Ansatz (22) zur Montage des Stabes an einer Trägerstruktur (S), der sich zumindest teilweise gemäß einer zweiten Längsachse (X22; X22T), senkrecht zur ersten Längsachse erstreckt und der einen Querschnitt in Form eines U mit flachem Verbindungsschenkel aufweist, mit einer Bodenwand (P'0; P'0S, P'0T) und zwei ebenen Seitenschenkeln (A3, A4; A3S, A4S, A3T, A4T),
wobei dieses Verfahren Schritte umfasst, die darin bestehen:
a) einen Konsolenrohling (1) zu bilden, der ein erstes Stabteil (11) und ein zweites Ansatzteil (12) begrenzt
b) Bereiche (B1, B2) des ersten Teils, die vorgesehen sind, Schenkel (A1, A2) des Stabs (21) zu bilden, in Bezug auf die Ebene des Rohlings, in der sich die Bodenfläche (P0) befindet, um eine erste und eine zweite Biegelinie (L1, L2) und gemäß einer ersten Richtung (F1, F2) umzubiegen,
c) Bereiche (B3, B4; B3S, B4S, B3T, B4T) des zweiten Teils, die vorgesehen sind, die Schenkel (A3, A4) des Ansatzes (22) zu bilden, in Bezug auf die Ebene des Rohlings, in der sich die Bodenwand (P'0) befindet, um eine dritte und eine vierte Biegelinie (L3, L4; L3S, L4S, L3T, L4T) und gemäß einer zweiten Richtung (F3, F4) umzubiegen
e) die Schenkel des Stabs und die Schenkel des Ansatzes an ihrer Zone der teilweisen Überdeckung miteinander zu verbinden
**dadurch gekennzeichnet, dass**
- der Konsalenrohling (1) aus einem Stück ist und während des Schritts a) durch Stanzen eines selben Blechabschnitts gebildet wird und dieser Rohling ein Verbindungsband (13) zwischen dem ersten Stabteil (11) und dem zweiten Ansatzteil (12) begrenzt
- die zweite Richtung (F3, F4) entgegengesetzt zur ersten Richtung (F1, F2) ist und
- das Verfahren einen Schritt d) vor dem Schritt e) umfasst, der darin besteht, das Verbindungsband (13) in Bezug auf die Ebene des Rohlings jeweils um eine fünfte und eine sechste Biegelinie (L5, L6), die untereinander parallel sind, und gemäß zwei entgegengesetzten Richtungen (F5, F6) umzubiegen, wobei die Schenkel des Stabes und die Schenkel des Ansatzes in teilweiser Überdeckung mitgenommen werden.

12. Verfahren nach Anspruch 11, **dadurch gekennzeichnet, dass** bei dem Schritt e) die Schenkel (A1 - A4; A1 - A4T) untereinander durch Bördeln an der Maschine, mit der die Schritte a) und e) realisiert werden, verbunden werden.

## Claims

1. A support bracket (20) for a trough (300) for running cables or similar hardware, said bracket being formed by cutting and bending sheet metal and comprising:
- a bar (21) designed to support said trough, which bar extends along a first longitudinal axis (X21) and has a flat-bottomed, U-shaped transverse cross-section, with a bottom plate (P0) and two plane lateral wings (A1, A2);
- a lug (22) for mounting said bar to a support structure (S), which lug at least partly extends along a second longitudinal is (X22; X22T) perpendicular to said first longitudinal axis and which has a flat-bottomed, U-shaped transverse cross-section, with a bottom side (P'0, P'0S, P'OT) and two plane wings (A3, A4; A3S, A4S, A3T, A4T),
wherein
- said wings of said bar and said wings of said lug partially overlap and are rigidly connected together in their overlapping zones;
- said wings (A1, A2) of said bar are folded down, relative to said bottom plate (P0) and at first and second straight edges (J1, J2) joining with said bottom plate, along a first direction (F1, F2);
- said wings (A3, A4) of said lug (22) are folded down, relative to said bottom side (P'0) and at third and fourth straight edges (J3, J4) joining with said bottom plate, along a second direction (F3, F4),
**characterised in that**
- said bar (21) and said lug (22) are one piece, cut from the same sheet metal section, and are connected by a connection strip (13);
- said second direction (F3, F4) is opposite said first direction (F1, F2);
- said connection strip (13) is folded down, relative to said bottom plate (P0) and to said bottom plate (P'0) and at fifth and sixth parallel and straight edges (J5, J6) joining with said bottom plate and with said bottom side, respectively, along two opposite directions (F5, F6).

2. The bracket according to claim 1, **characterised in that** said first and second joining edges (J1, J2) are parallel to each other, said third and fourth joining edges (J3, J4) are parallel to each other and said fifth and sixth joining edges (J5, J6) are perpendicular to said first, second, third and fourth edges.

3. The bracket according to any one of the preceding claims, **characterised in that** said bar (21) is provided with at least one slot (111) for receiving a wire rod (301) of said trough and **in that** said slot extends both in said bottom plate (P0) and in at least one wing (A1, A2) of said bar.

4. The bracket according to claim 3, **characterised in that** at least one first edge (115) of said slot (111) located on said bottom plate (P0) is provided with at least one tab (114) for locking a wire rod (301), which tab is deformable between:
- a first configuration in which said tab (114) is folded down along a direction (Δ₁₁₄) perpendicular to the longitudinal is (X21) of said bar and extends, relative to a second edge (116) of said slot, at a first distance (d2), measured parallel to the longitudinal axis of said bar, that is strictly greater than the diameter (D301) of said wire rod (301); and
- a second configuration in which said tab (114) extends along a direction parallel or substantially parallel to the longitudinal is (X21) of said bar, toward said second edge (116) of said slot, at a second distance (d1) from said second edge, measured parallel to the longitudinal axis of said bar, that is strictly less than the diameter of said wire rod.

5. The bracket according to any one of the preceding claims, **characterised in that** in their partial overlapping zone said wings (A1, A2) of said bar (21) and said wings (A3, A4) of said lug (22) are rigidly connected together by crimping, bolting or welding.

6. The bracket according to any one of the preceding claims, **characterised in that** said lug (22) is straight and rigid and **in that** its bottom side (P'0) is perforated with at least one opening (121) for the passage of means (200) for fixing said bracket (20) to a support structure (S).

7. The bracket according to any one of claims 1 to 5, **characterised in that**:
- said lug (22) is formed from a first segment (22S) and a second segment (22T);
- said first segment (22S) is connected to said connection strip (13) by said sixth joining edge (J6);
- said first and second segments (22S, 22T) are connected together by a seventh joining edge (J7);
- said bottom side (P'0T) of said second segment (22T) is perforated with at least one opening (121T) for the passage of means for fixing to a support structure; and
- said wings (A3S, A4S, A3T, A4T) of said first and second segments partially overlap and are rigidly connected together at their overlapping zone.

8. The bracket according to any one of the preceding claims, **characterised in that** said lug (22) is provided with tabs (22X), at said third and fourth straight joining edges (J3, J4), for attaching to an upright (400).

9. The bracket according to any one of the preceding claims, **characterised in that** said lug (22) is provided with a cut-out (125), on said bottom plate (P'0), which cut-out outlines a tab (126) that can be folded down about an is (Y126) perpendicular to said second longitudinal axis (X22).

10. A cableway section comprising at least one trough (300) defining a path for cables or similar hardware and at least one bracket according to any one of the preceding claims.

11. A method for manufacturing a support bracket (20) for a trough (300) for running cables or similar hardware, by cutting and bending a sheet metal section, said bracket comprising:
- a bar (21) designed to support said trough (300), which bar extends along a first longitudinal axis (X21) and has a flat-bottomed, U-shaped transverse cross-section, with a bottom plate (P0) and two plane lateral wings (A1, A2);
- a lug (22) for mounting said bar to a support structure (S), which lug at least partly extends along a second longitudinal axis (X22; X22S) perpendicular to said first longitudinal axis and which has a flat-bottomed, U-shaped transverse cross-section, with a bottom side (P'0, P'0S, P'OT) and two plane wings (A3, A4; A3S, A4S, A3T, A4T),
which method includes steps comprising:
a) forming a bracket preform (1) defining a first bar part (11) and a second lug part (12);
b) folding down portions (B 1, B2) of said first part that are designed to form said wings (A1, A2) of said bar (21), relative to the plane of said preform in which said bottom plate (P0) is located, around a first and a second fold line (L1, L2) and along a first direction (F1, F2);
c) folding down portions (B3, B4; B3S, B3T, B4T) of said second part that are designed to form said wings (A3, A4) of said lug (22), relative to the plane of said preform in which said bottom side (P'0) is located, around a third and a fourth folding line (L3, L4; L3S, L4S, L3T, L4T) and along a second direction (F3, F4);
d) rigidly connecting together said wings of said bar and said wings of said lug in their partial overlapping zone;
**characterised in that**:
- said bracket preform (1) is one piece and is formed, during step a), by being cut from the same sheet metal section, and said preform defines a connection strip (13) between said first bar part (11) and said second lug part (12);
- said second direction (F3, F4) is opposite said first direction (F1, F2); and
- the method comprises a step d), prior to step e), that involves folding down said connection strip (13), relative to the plane of said preform, respectively around fifth and sixth folding lines (L5, L6) parallel to each other, and along two opposite directions (F5, F6), by bringing together said wings of said bar and said wings of said lug into a partial overlap.

12. The method according to claim 11, **characterised in that** during step e) the wings (A1-A4; A1-A4T) are rigidly connected together by crimping within the machine in which steps a) and e) are carried out.
